Europäisches Patentamt

European Patent Office

Office européen des brevets

(11) Numéro de publication: **0 396 159 B1**

(12) **FASCICULE DE BREVET EUROPEEN**

(45) Date de publication du fascicule du brevet: **30.08.95**  (51) Int. Cl.⁶: **C01F 17/00**, B01J 23/10

(21) Numéro de dépôt: **90112440.4**

(22) Date de dépôt: **27.06.86**

(60) Numéro de publication de la demande initiale
en application de l'article 76 CBE : **0 207 857**

(54) **Composition à base d'oxyde cérique, sa préparation et ses utilisations.**

(30) Priorité: **03.07.85 FR 8510137**

(43) Date de publication de la demande:
**07.11.90 Bulletin 90/45**

(45) Mention de la délivrance du brevet:
**30.08.95 Bulletin 95/35**

(84) Etats contractants désignés:
**AT BE CH DE FR GB IT LI LU NL SE**

(56) Documents cités:
**GB-A- 2 102 780**

**ZEITSCHRIFT FUER ANORGANISCHE UND ALLGEMEINE CHEMIE vol. 315, no. 3-4, June 1962, pages 121-135; G. RIENAECKER et al. "Eigenschaften von Cer/Lanthan-Mischoxyden, insbesondere als Katalysatoren der Oxydation des Kohlenoxydes"**

(73) Titulaire: **RHONE-POULENC CHIMIE**
**25, Ouai Paul Doumer**
**F-92408 Courbevoie Cédex (FR)**

(72) Inventeur: **Sauvion, Guy-Noel**
**10, Passage Henriette**
**F-94100 SAINT MAUR DES FOSSES (FR)**
Inventeur: **Caillod, Jack**
**31, rue Phanie-Leleu**
**F-95150 Taverny (FR)**
Inventeur: **Gourlaouen, Claire**
**188, rue Lafayette**
**F-75010 Paris (FR)**

(74) Mandataire: **Esson, Jean-Pierre et al**
**RHONE-POULENC CHIMIE,**
**Direction de la Propriété Industrielle,**
**25, quai Paul Doumer**
**F-92408 Courbevoie Cédex (FR)**

## Description

La présente invention est relative à un procédé de stabilisation à haute température d'un oxyde cérique et ses applications tout particulièrement dans le domaine de la catalyse.

Dans l'exposé qui suit de l'invention, on entend par surface spécifique, la surface spécifique B.E.T déterminée selon la méthode BRUNAUER - EMMETT - TELLER décrite dans le périodique " The Journal of American Society 1938, 60, 309".

Il est connu que l'oxyde cérique peut être utilisé en tant que catalyseur ou support de catalyseur. On peut citer par exemple, les travaux de Paul MERIAUDEAU et Coll. relatifs à la synthèse du méthanol à partir de CO + $H_2$ sur des catalyseurs au platine déposé sur de l'oxyde cérique. (C.R. Acad. Sc. Paris t.297 - Série II-471 - 1983).

Il est également bien connu que l'efficacité d'un catalyseur est généralement d'autant plus grande que la surface du contact entre le catalyseur et les réactifs est grande. Pour ce faire, il est nécessaire que le catalyseur soit maintenu en un état le plus divisé possible, c'est-à-dire que les particules solides qui le composent soient aussi petites et individualisées que possible. Le rôle fondamental du support est donc de maintenir les particules de catalyseur ou cristallites au contact des réactifs, à l'état le plus divisé possible.

Lors de l'emploi prolongé d'un support de catalyseur, il se produit une diminution de la surface spécifique due à la coalescence des micropores très fins. Au cours de cette coalescence, une partie du catalyseur est englobée dans la masse du support et ne peut plus être en contact avec les réactifs.

Jusqu'à présent, la plupart des oxydes cériques préparés présentent une surface spécifique qui décroit rapidement pour des températures de fonctionnement supérieures à 500°C. Ainsi, R.ALVERO et coll. (J. Chem. Soc. Dalton Trans 1984, 87) ont obtenu à partir de nitrato cérate d'ammonium, un oxyde cérique présentant après calcination à une température de 600°C, une surface spécifique de 29 m²/g.

Les auteurs précités P. MERIAUDEAU et coll ont déterminé sur le même type de préparation une surface spécifique de 27 m²/g.

On connait enfin par le document GB-A-2 102 780 un procédé de préparation d'un composé de cérium dispersible par chauffage d'un oxyde-hydrate de cérium avec un sel. Le produit obtenu peut être facilement dispersé dans l'eau. Ce document n'évoque pas le problème de la stabilisation de la surface spécifique de l'oxyde de cérium.

La présente invention se propose de fournir un procédé pour la stabilisation à haute température de la surface spécifique d'un oxyde cérique combiné avec au moins un oxyde d'un autre élément métallique A choisi dans le groupe constitué par les métaux de terres rares y compris l'yttrium.

L'oxyde cérique mis en oeuvre dans l'invention est un produit connu et décrit dans la littérature.

Il peut être préparé notamment par chauffage à l'air entre 400°C et 1000° de l'hydroxyde cérique ou de certains sels oxygénés tels que nitrates, sulfates, carbonates, oxalates, acétates, (Cf. Paul PASCAL - Nouveau Traité de Chimie Minérale. Tome VII p 777 - 1959 -).

L'oxyde cérique mis en oeuvre présente une surface spécifique d'au moins 10 m²/g de préférence, supérieure à 80 m²/g : et avantageusement comprise entre 80 et 200 m²/g.

Constitue une matière première de choix, l'oxyde cérique décrit dans la demande de brevet n° 86/04347 qui présente une surface spécifique pouvant atteindre 180 à 160 m²/g mesurée après calcination à une température comprise entre 400 et 450°C : ledit oxyde étant préparé comme décrit ultérieurement par calcination d'une dispersion colloïdale aqueuse d'un composé de cérium IV qui a été auparavant déstabilisé par addition d'une base.

Il peut être avantageux dans certaines applications de le mettre en forme en effectuant une agglomération de ces particules selon des techniques bien connues d'extrusion ou de pastillage par pression.

La composition de l'invention peut contenir outre l'oxyde cérique, un oxyde du ou des métaux précités en une quantité représentant de 1 à 20% du poids de l'oxyde cérique et choisie de préférence entre 1 et 5%.

Elle peut être préparée par un procédé qui consiste à mélanger intimement l'oxyde cérique avec au moins un oxyde des autres métaux précités.

On effectue de préférence ce mélange intime par imprégnation de l'oxyde cérique à l'aide d'une solution d'au moins un sel des métaux précités décomposable en oxyde par chauffage que l'on dénommera, de manière simplifiée, précurseur d'oxyde.

Comme précurseurs d'oxydes de terres rares, on peut faire appel, par exemple, aux nitrates, chlorures, sulfates, carbonates d'yttrium ou de lanthanides tels que le lanthane, le praséodyme, le néodyme, le samarium, l'europium, le gadolinium, le terbium, le dysprosium, l'holmium, l'erbium, le thulium, l'ytterbium, le lutécium. Parmi les lanthanides, on met en oeuvre de préférence le lanthane, le néodyme, le praséodyme.

EP 0 396 159 B1

Selon une variante préférée de l'invention, l'imprégnation est réalisée "à sec" c'est-à-dire que le volume total de solution utilisée est approximativement égal au volume poreux total présenté par le support. Pour la détermination du volume poreux, on peut le faire selon la méthode connue au porosimètre à mercure ou bien mesurer sur un échantillon, la quantité d'eau qu'il absorbe.

Il est également possible d'imprégner le support par trempage de celui dans la solution du précurseur d'oxyde de l'élément A et d'éliminer l'excès de solution par égouttage.

La concentration de la solution du précurseur d'oxyde dépend de la solubilité dudit précurseur.

Selon une deuxième étape du procédé de l'invention, on sèche l'oxyde cérique imprégné pour éliminer l'eau, en laissant ainsi les précurseurs des oxydes désirés sous forme dispersée dans l'oxyde cérique.

Le séchage est effectué le plus souvent à l'air à une température qui peut varier entre 80 et 300°C et choisie de préférence entre 100 et 150°C. Le séchage est poursuivi jusqu'à obtention d'un poids constant.

Généralement, la durée du séchage est comprise entre 1 et 24 heures.

Selon la troisième étape du procédé de l'invention, on calcine l'oxyde cérique imprégné à une température comprise généralement entre 400 et 1000°C et de préférence entre 600 et 900°C. La durée de calcination doit être suffisante pour transformer les précurseurs, en oxydes.

La durée de calcination peut varier dans de larges limites entre 1 et 24 heures et est choisie de préférence entre 4 et 10 heures.

La composition à base d'oxyde cérique préparée selon l'invention permet la stabilisation à haute température, de sa surface spécifique ce qui est mis en évidence dans les exemples ci-après.

Un autre mode de préparation de l'invention consiste à introduire l'élément métallique A, sous la forme de son précurseur d'oxyde, au cours de la fabrication de l'oxyde cérique.

Un mode de réalisation de cette variante d'exécution consiste à préparer la composition de l'invention selon un procédé qui consiste :

- dans une première étape, à introduire au moins un précurseur d'oxyde d'un élément métallique A dans une dispersion colloïdale aqueuse d'un composé de cérium IV ,
- dans une deuxième étape, à déstabiliser ladite dispersion par addition d'une base,
- dans une troisième étape, à séparer le précipité obtenu,
- dans une quatrième étape, à le soumettre à un traitement thermique.

Dans la première étape du procédé de l'invention on peut faire appel à toute dispersion colloïdale aqueuse d'un composé de cérium IV et plus particulièrement à celles qui sont décrites dans la demande de brevet n° 86/04347 qui permettent d'obtenir ensuite des oxydes cériques à grande surface spécifique.

Les dispersions colloïdales aqueuses d'un composé de cérium IV décrites dans la demande de brevet n° 86/04347 sont obtenues par mise en dispersion dans l'eau d'un composé de cérium IV de formule générale (I) :

$$Ce\,(M)_x\,(OH)_y\,(NO_3)_z\,,\,n\,H_2O \qquad (I)$$

dans laquelle :

- M représente un métal alcalin ou un radical ammonium quaternaire
- x est compris entre 0 et 0,2
- z est compris entre 0 et 0,7
- y est tel que y = 4- z + x
- n est compris entre 0 et environ 20.

On dénomme de manière simplifiée, par le terme "sol", la dispersion colloïdale aqueuse du composé de cérium IV répondant à la formule (I).

La concentration du composé de cérium IV dans le sol n'est pas critique. Lorsqu'elle est exprimée en $CeO_2$, elle se situe entre 0,1 et 2,0 moles/litre et, de préférence, entre 0,5 et 1 mole/litre.

Le taux de cérium IV sous forme colloïdale est supérieur à 95 % mais l'invention n'exclut pas le sol dans lequel il y aurait présence de cérium IV sous forme ionique. On choisit de préférence un taux de cérium compris entre 99 et 100 %.

La taille des colloïdes présents dans le sol peut varier dans une gamme assez large. Généralement, le diamètre hydrodynamique moyen des colloïdes déterminé par diffusion quasi-élastique de la lumière selon la méthode décrite par Michael L. Mc Connell dans Analytical Chemistry 53, n° 8 1007 A (1981), peut varier entre 300 et 2000 Å.

A titre d'exemples de sols présentant les caractéristiques précitées, on peut citer plus particulièrement ceux de la demande de brevet n° 86/04347 qui sont préparés par mise en dispersion dans l'eau d'un composé de cérium IV répondant à la formule (I) dans laquelle x est égal à 0 et z est compris entre 0,35 et 0,7, qui présentent des tailles de colloïdes pouvant varier dans une gamme assez large allant de 300 à

3

1000 Å et lesdits colloïdes par basification jusqu'à obtention d'un pH de 3,0, peuvent devenir plus gros, leur diamètre hydrodynamique se situant alors entre 500 et 2000 Å.

L'obtention de sols ayant les tailles de colloïdes précitées consiste à mettre en dispersion dans l'eau, le composé de cérium IV précité qui est directement dispersable dans l'eau. Ledit composé est dispersé sous agitation en milieu aqueux ou en milieu légèrement acide de telle sorte qu'il conduise à un sol dont le pH est compris entre 1 et 2,5.

Ledit composé de cérium IV est préparé selon un procédé qui consiste dans une première étape, à hydrolyser une solution aqueuse d'un sel de cérium IV en milieu acide, dans une deuxième étape, à séparer le précipité obtenu et dans une troisième étape, qui n'est pas obligatoire, à le traiter thermiquement.

Dans la première étape, on réalise l'hydrolyse d'une solution aqueuse d'un sel de cérium IV.

A cet effet, on part d'une solution de cérium IV qui peut être une solution aqueuse de nitrate cérique. Ladite solution peut contenir sans inconvénient du cérium à l'état céreux mais il est souhaitable pour avoir un bon rendement de précipitation qu'elle contienne au moins 85 % de cérium IV.

La solution de sel de cérium est choisie de telle sorte qu'elle ne contienne pas d'impuretés qui puissent se retrouver, dans le produit final. Il peut être avantageux de mettre en jeu une solution d'un sel de cérium présentant un degré de pureté supérieure à 99 %.

La concentration de la solution de sel de cérium n'est pas un facteur critique, selon l'invention. Lorsqu'elle est exprimée en cérium IV, elle peut varier entre 0,3 et 3 moles par litre de préférence entre 0,5 et 1,5 moles/litre.

A titre de matières premières, on peut faire appel à une solution de nitrate cérique obtenue par action de l'acide nitrique sur un oxyde cérique hydraté préparé d'une manière classique, par réaction d'une solution d'un sel céreux par exemple, le carbonate céreux et d'une solution d'ammoniaque en présence d'eau oxygénée.

La solution de nitrate cérique obtenue selon le procédé d'oxydation électrolytique d'une solution de nitrate céreux et qui est décrite dans la demande de brevet français FR-A 2 570 087 constitue une matière première de choix.

Le milieu d'hydrolyse est constitué par de l'eau dont la nature n'est pas critique et qui est, de préférence, de l'eau distillée ou permutée.

L'acidité peut être apportée par ajout d'un acide minéral. D'une manière préférentielle, on choisit l'acide nitrique. On peut utiliser un acide qui peut être concentré ou dilué, par exemple, jusqu'à $10^{-2}$ N.

Elle peut également provenir de la solution de nitrate cérique qui peut être légèrement acide et avoir une normalité variant entre 0,01 N et 5 N de préférence entre 0,1 N et 1 N.

La quantité d'ions $H^+$ introduite pour la réaction d'hydrolyse est telle que le rapport molaire $[H^+]/[Ce^{IV}$ éq.] est supérieur ou égal à 0 et inférieur ou égal à 3 de préférence compris entre 0,4 et 2,5.

La proportion entre la solution aqueuse de sel de cérium IV et le milieu d'hydrolyse (essentiellement l'eau) est telle que la concentration finale équivalente en cérium IV est comprise entre 0,1 et 1,0 mole/litre de préférence 0,2 à 0,6 mole/litre.

On définit la concentration finale équivalente en cérium IV par l'équation suivante :

$$[Ce^{IV} \text{ éq.}] = \frac{[Ce^{IV}] \times V'}{V + V'}$$

dans laquelle :
- $[Ce^{IV}]$ est la concentration en moles/litre de la solution de sel de cérium IV
- V représente le volume d'eau éventuellement additionné d'acide
- V' représente le volume de la solution de cérium IV.

L'hydrolyse du sel de cérium IV réalisée dans les conditions telles que décrites précédemment est effectuée d'une manière préférentielle entre 70°C et 120°C et de préférence à la température de reflux du milieu réactionnel qui se situe vers 100°C.

Il est plus aisé de travailler à la température de reflux qui est facile à contrôler et à reproduire.

On peut mettre en oeuvre le procédé de préparation du composé de cérium IV selon plusieurs variantes. Par exemple, on peut additionner en une seule fois, graduellement ou en continu la solution de sel de cérium IV dans l'eau contenant éventuellement de l'acide portée à la température réactionnelle ou inversement.

On peut également conduire le procédé en continu. A cet effet, on effectue simultanément et en continu le mélange de la solution de sel de cérium IV et du milieu d'hydrolyse et l'on chauffe en continu le mélange, à la température réactionnelle choisie.

On peut mélanger la solution de sel de cérium IV et le milieu d'hydrolyse puis l'on porte ledit mélange maintenu sous agitation à la température réactionnelle.

Quel que soit le mode d'exécution, on observe la formation d'un précipité. Le temps de réaction peut varier entre 2 et 8 heures et de préférence, entre 3 et 6 heures.

Dans l'étape suivante, on sépare selon les techniques classiques, la masse réactionnelle qui se présente sous la forme d'une suspension dont la température se situe le plus souvent entre 90°C et 100°C. Cette opération est effectuée avant ou après refroidissement de la masse réactionnelle à température ambiante c'est-à-dire le plus souvent entre 10°C et 25°C.

On sépare le précipité selon les techniques classiques de séparation : filtration, décantation, essorage et centrifugation.

On obtient un précipité d'un composé de cérium IV qui répond à la formule (I) dans laquelle n est supérieur à 0 et inférieur ou égal à environ 20. Ce composé est directement dispersable dans l'eau.

Il est également possible de soumettre le précipité obtenu à une opération de séchage qui selon les conditions et notamment selon la durée du séchage et de sa température permet d'obtenir un composé de cérium IV de formule (I) dans laquelle n est supérieur ou égal à 0 et inférieur à 20.

On soumet le produit obtenu à un séchage qui peut varier entre 15°C et 100°C et de préférence à température ambiante et 50°C. Cette opération peut être faite à l'air ou sous pression réduite par exemple entre 1 et 100 mm de mercure (133,3322 Pa et 13 332,2 Pa). La durée du séchage est choisie de préférence entre 5 et 48 heures afin d'obtenir un produit sec (n = 0).

Quel que soit le degré d'hydratation du composé de cérium IV répondant à la formule (I), on obtient un composé de cérium IV directement dispersable dans l'eau et qui par mise en dispersion dans l'eau conduit à un sol ayant des colloïdes présentant un diamètre hydrodynamique variant entre 300 et 1000 Å.

A titre d'autres exemples de sols susceptibles d'être mis en oeuvre dans le procédé de l'invention, on peut faire appel à des sols ayant généralement un diamètre hydrodynamique moyen variant entre 300 et 600 Å et préparé selon un procédé qui consiste à former une dispersion d'oxyde cérique hydraté avec de l'eau et un acide notamment l'acide nitrique, à chauffer la suspension, la quantité d'acide présente dans la dispersion est telle que le pH est inférieur à 5,4 et, de préférence, inférieur à 2,8. L'oxyde cérique hydraté de départ est préparé par réaction d'une solution d'un sel céreux, par exemple, le carbonate céreux et d'une solution d'ammoniaque en présence d'un agent oxydant, notamment l'eau oxygénée. Pour plus de détails sur la préparation du sol, on peut se référer à FR-A-2 416 867.

Dans la première étape du procédé de l'invention, on introduit au moins un précurseur d'oxyde de l'élément A dans une dispersion colloïdale aqueuse d'un composé de cérium IV décrite ci-dessus.

Les précurseurs d'oxydes métalliques A peuvent être mis en oeuvre sous forme de solution aqueuse ou éventuellement sous forme solide si elle existe directement dans la dispersion colloïdale aqueuse du composé de cérium IV.

La quantité de précurseur(s) d'oxyde(s) mis en oeuvre est telle que l'on ait les pourcentages pondéraux définis dans la composition finale.

La deuxième étape du procédé de l'invention consiste à effectuer la déstabilisation de la dispersion colloïdale aqueuse d'un composé de cérium IV contenant au moins un précurseur d'oxyde de l'élément A par addition d'une base dans ladite dispersion.

La solution basique mise en oeuvre selon le procédé de l'invention peut être notamment une solution aqueuse d'ammoniaque, de soude ou de potasse. On peut également faire appel à l'ammoniac gazeux. Selon l'invention, on met en oeuvre de préférence une solution d'ammoniaque.

La normalité de la solution basique mise en oeuvre n'est pas un facteur critique selon l'invention, elle peut varier dans de larges limites, par exemple, entre 0,1 et 11 N mais il est préférable de faire appel à des solutions dont la concentration varie entre 5 et 10 N.

La quantité de base additionnée est déterminée de telle sorte que le pH final de la dispersion traitée soit supérieur à 7 et de préférence supérieur ou égal à 9 et inférieur ou égal à 10.

D'une manière pratique, on additionne la base dans la dispersion colloïdale aqueuse de composé de cérium IV contenant au moins un précurseur d'oxyde de l'élément A ou inversement. L'addition peut être effectuée en une seule fois, graduellement ou en continu. Elle s'effectue sous agitation.

Préférentiellement, on ajoute la base dans ladite dispersion.

Le débit d'addition de la base dans ladite dispersion n'est pas critique : lorsqu'il est exprimé en moles d'OH$^-$ par mole de cérium IV et par heure, il peut varier entre 0,1 et 5 et de préférence 2 et 4.

On fait le mélange à une température qui est de préférence inférieure à 60°C et on travaille de préférence à la température ambiante le plus souvent comprise entre 10 et 25°C.

A la fin de l'addition de la solution basique, on peut éventuellement maintenir encore le milieu réactionnel sous agitation pendant quelque temps afin de parfaire la précipitation : cette durée n'est pas critique et peut varier entre 1 minute et 24 heures.

La troisième étape du procédé consiste à séparer le précipité obtenu selon les techniques classiques de séparation solide-liquide: filtration, décantation, centrifugation ou essorage.

Cette séparation est effectuée généralement à température ambiante.

On peut éventuellement soumettre le précipité séparé à une opération de lavage afin d'éliminer les ions OH⁻.

Le lavage peut être opéré à l'eau ou à l'aide d'un solvant organique. On peut faire appel aux hydrocarbures aliphatiques, cycloaliphatiques ou aromatiques, à des cétones aliphatiques ou cycloaliphatiques ou à des alcools aliphatiques ou cycloaliphatiques tels que le méthanol, l'éthanol, le n-propanol, l'isopropanol, le n-butanol, l'isobutanol, le néobutanol.

On effectue de un à plusieurs lavages et le plus souvent de un à trois lavages.

Après ce lavage, la teneur en eau du précipité est comprise entre 20 et 80 % et généralement entre 20 et 50 %.

Dans la quatrième étape du procédé de l'invention, on effectue le traitement thermique du produit obtenu après séparation et éventuellement lavage.

Le traitement thermique débute généralement par un séchage effectué séché à l'air ou sous pression réduite de l'ordre de 1 à 100 mm de mercure (133,3322 Pa et 13 332,2 Pa). La température de séchage peut varier entre la température ambiante et 100°C et la durée de séchage n'est pas critique et peut être comprise entre 2 et 48 heures et de préférence 10 à 24 heures.

Enfin, dans une dernière opération, on soumet le produit séché à une calcination à une température choisie entre 400°C et 1000°C mais de préférence, entre 600°C et 900°C. Elle dure environ 1 heure à 24 heures et de préférence 4 à 10 heures.

La température de calcination est déterminée en fonction de la surface spécifique souhaitée pour l'application catalytique subséquente en tenant compte du fait que la surface spécifique est d'autant plus faible que la température de calcination est plus élevée.

La présence de l'élément métallique A introduit dans l'oxyde cérique selon ce mode de préparation permet également, comme démontré dans l'exemple ci-après, une meilleure stabilité de la surface spécifique de l'oxyde cérique soumis à une élévation de température.

Les applications de la composition à base d'oxyde cérique selon l'invention sont très nombreuses. On peut citer notamment les applications en tant que charge, liant, washcoat, épaississant, dispersant, renforçateur, pigment, absorbant.

L'oxyde cérique stabilisé selon l'invention le rend bien adapté pour être utilisé dans le domaine de la catalyse, comme catalyseur ou comme support catalytique.

Il peut être employé comme catalyseur ou support de catalyseur pour effectuer diverses réactions telles que, par exemple : la déshydratation, l'hydrosulfuration, l'hydro- dénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion.

L'exemple qui suit illustre l'invention sans toutefois la limiter. Dans l'exemple, les éléments métalliques sont dosés par spectromètrie d'émission plasma.

Exemple :

Dans cet exemple, on prépare un oxyde cérique renfermant 2,5% de $La_2O_3$.

On effectue un mélange intime de 153 g d'oxyde cérique avec 32cm³ d'une solution de nitrate de lanthane contenant 116g/l d'oxyde de lanthane.

On séche le produit à 140°C pendant 6 heures puis on le calcine pendant 6 heures à différentes températures : 400°C, 550°C, 700°C et 900°C.

On rassemble les résultats dans le tableau ci-dessous où sont indiquées les surfaces spécifiques du produit selon l'exemple et, a titre comparatif de l'oxyde cérique sans stabilisant (essai A).

6

EP 0 396 159 B1

Tableau

|  | Additif | 400°C | 550°C | 700°C | 900°C |
|---|---|---|---|---|---|
| Exemple | La$_2$O$_3$ | 75 | 70 | 50 | 10 |
| Essai A | - | 70 | 50 | 30 | 5 |

**Revendications**

1. Procédé de fabrication d'une composition oxyde cérique à surface spécifique stabilisée caractérisé en ce qu'on ajoute à un oxyde cérique de surface spécifique supérieure à 10 m$^2$/g, un additif constitué par au moins un oxyde ou un precurseur d'un oxyde de métaux choisis dans le groupe comprenant les terres rares et en ce qu'on calcine entre 400 et 1000°C ledit oxyde cérique.

2. Procédé selon la revendication 1 caractérisé par le fait que l'additif représente de 1 à 20 % du poids de l'oxyde cérique.

3. Procédé selon la revendication 1 à 2 caractérisé par le fait que l'additif représente de 1 à 5 % du poids de l'oxyde cérique.

4. Procédé selon la revendication 1 caractérisé par le fait qu'on mélange intimement l'oxyde cérique avec au moins un oxyde des métaux précités.

5. Procédé selon la revendication 1 caractérisé par le fait que l'on imprègne l'oxyde cérique à l'aide d'une solution d'au moins un sel des métaux précités décomposable en oxyde par chauffage.

6. Procédé selon la revendication 5 caractérisé par le fait que le volume total de la solution précitée est approximativement égal au volume poreux total de l'oxyde cérique.

7. Procédé selon l'une des revendications 5 ou 6 caractérisé par le fait que le précurseur d'oxyde est un nitrate, un sulfate, un chlorure, un carbonate de terres rares.

8. Procédé selon l'une des revendications 5 à 7 caractérisé par le fait que l'oxyde cérique imprégné est séché entre 80 et 300°C.

9. Procédé selon la revendication 8 caractérisé par le fait que la température de séchage est choisie entre 100 et 150°C.

10. Procédé selon l'une des revendications 8 ou 9 caractérisé par le fait que la durée du séchage varie entre 1 et 24 heures.

11. Procédé selon l'une des revendications précédentes caractérisé par le fait que la température de calcination est choisie entre 600 et 900°C.

12. Procédé selon l'une des revendications précédentes caractérisé par le fait que la durée de calcination varie entre 1 et 24 heures.

13. Procédé selon la revendication 12 caractérisé par le fait que la durée de calcination est choisie entre 4 et 10 heures.

14. Procédé de fabrication d'une composition oxyde cérique à surface spécifique stabilisée caractérisé par le fait qu'il consiste :
    - dans une première étape, à introduire au moins un précurseur d'oxyde d'un élément métallique A choisi dans le groupe comprenant les terres rares dans une dispersion colloïdale aqueuse d'un composé de cérium IV, de surface spécifique supérieure à 10 m$^2$/g,
    - dans une deuxième étape, à déstabiliser ladite dispersion par addition d'une base,

7

- dans une troisième étape, à séparer le précipité obtenu,
- dans une quatrième étape, à le soumettre à un traitement thermique.

**15.** Procédé selon la revendication 14 caractérisé par le fait que le précurseur d'oxyde est un nitrate, un sulfate, un chlorure ou un carbonate de terres rares.

**16.** Procédé selon la revendication 14 ou 15 caractérisé par le fait que la dispersion colloïdale aqueuse d'un composé de cérium IV est obtenue par mise en dispersion dans l'eau d'un composé de cérium IV répondant à la formule générale (I) :

$$Ce\,(M)_x\,(OH)_y\,(NO_3)_z\,,\,n\,H_2O \qquad (I)$$

dans laquelle :
- M représente un métal alcalin ou un radical ammonium quaternaire
- $x$ est compris entre 0 et 0,2
- $z$ est compris entre 0 et 0,7
- $y$ est tel que $y = 4 - z + x$
- $n$ est compris entre 0 et environ 20

**17.** Procédé selon la revendication 16 caractérisé par le fait que la concentration du composé de cérium IV dans ladite dispersion colloïdale varie entre 0,1 et 2,0 moles/litre.

**18.** Procédé selon l'une des revendications 16 ou 17 caractérisé par le fait que ladite dispersion est obtenue par mise en dispersion dans l'eau d'un composé de cérium IV obtenu par hydrolyse d'une solution aqueuse de sel de cérium IV en milieu acide, par séparation du précipité obtenu et éventuellement traitement thermique.

**19.** Procédé selon l'une des revendications 14 à 18 caractérisé par le fait que la normalité de la solution basique varie entre 5 et 10 N.

**20.** Procédé selon l'une des revendications 14 à 19 caractérisé par le fait que la quantité de base additionnée est telle que le pH final de la dispersion traitée soit supérieur à 7.

**21.** Procédé selon la revendication 20 caractérisé par le fait que la quantité de base additionnée est telle que le pH final de la dispersion traitée soit supérieur ou égal à 9, et inférieur ou égal à 10.

**22.** Procédé selon l'une des revendications 14 à 21 caractérisé par le fait que l'on additionne la base dans la dispersion colloïdale aqueuse du composé de cérium IV contenant au moins un précurseur d'oxyde ou inversement : l'addition pouvant être effectuée en une seule fois, graduellement ou en continu.

**23.** Procédé selon la revendication 22 caractérisé par le fait que le débit d'addition de la base dans ladite dispersion varie entre 0,1 et 5 moles d'OH⁻ par mole de cérium IV et par heure.

**24.** Procédé selon l'une des revendications 14 à 23 caractérisé par le fait que la température à laquelle on ajoute la base est choisie entre la température ambiante et 60 °C.

**25.** Procédé selon l'une des revendications 14 à 24 caractérisé par le fait que l'on effectue la séparation du précipité selon les techniques classiques de séparation solide-liquide : filtration, décantation, centrifugation ou essorage puis on effectue un ou plusieurs lavages du précipité à l'aide d'eau ou d'un solvant organique.

**26.** Procédé selon l'une des revendications 14 à 25 caractérisé par le fait que l'on effectue au début du traitement thermique un séchage du précipité à l'air ou sous pression réduite de l'ordre de 1 à 100 mm de mercure, à une température comprise entre la température ambiante et 100 °C pendant une durée comprise entre 2 et 48 heures.

**27.** Procédé selon l'une des revendications 14 à 26 caractérisé par le fait que l'on effectue l'étape de calcination à une température comprise entre 400 et 1000 °C pendant une durée allant de 1 heure et

EP 0 396 159 B1

24 heures.

28. Procédé selon la revendication 27 caractérisé par le fait que la température de calcination est comprise entre 600 et 900°C.

29. Procédé selon l'une des revendications 27 et 28 caractérisé par le fait que la durée de calcination est comprise entre 4 et 10 heures.

**Claims**

1. A method for the manufacture of a cerium IV oxide composition with a stabilised specific surface area, characterised in that an additive, constituted by at least one oxide or oxide precursor of metals selected from the group comprising the rare earths, is added to a cerium IV oxide with a specific surface area of more than 10 $m^2$/g, then said cerium IV oxide is calcined at between 400°C and 1000°C.

2. A method according to claim 1, characterised in that the additive represents 1% to 20% of the weight of the cerium IV oxide.

3. A method according to claim 1 or claim 2, characterised in that the additive represents 1% to 5% of the weight of the cerium IV oxide.

4. A method according to claim 1, characterised in that the cerium IV oxide is intimately mixed with at least one of the said metal oxides.

5. A method according to claim 1, characterised in that the cerium IV oxide is impregnated with a solution of at least one salt of the said metals which is decomposable to the oxide on heating.

6. A method according to claim 5, characterised in that the total volume of the said solution is approximately equal to the total pore volume of the cerium IV oxide.

7. A method according to claim 5 or claim 6, characterised in that the oxide precursor is a rare earth nitrate, sulphate, chloride or carbonate.

8. A method according to any one of claims 5 to 7, characterised in that the impregnated cerium IV oxide is dried at between 80°C and 300°C.

9. A method according to claim 8, characterised in that the drying temperature is between 100°C and 150°C.

10. A method according to claim 8 or claim 9, characterised in that the drying period is between 1 and 24 hours.

11. A method according to any one of the preceding claims, characterised in that the calcining temperature is between 600°C and 900°C.

12. A method according to any one of the preceding claims, characterised in that the calcining period is between 1 and 24 hours.

13. A method according to claim 12, characterized in that the calcining period is between 4 and 10 hours.

14. A method for the manufacture of a cerium IV oxide composition with a stabilised specific surface area, characterised in that it consists of:
    - in a first step, introducing at least one oxide precursor of a metallic element A selected from the group comprising the rare earths into an aqueous colloidal dispersion of a cerium IV compound with a specific surface area of more than 10 $m^2$/g,
    - in a second step, destabilizing said dispersion by addition of a base,
    - in a third step, separating the precipitate obtained,
    - in a fourth step, heat treating the precipitate.

9

**15.** A method according to claim 14, characterised in that the oxide precursor is a rare earth nitrate, sulphate, chloride or carbonate.

**16.** A method according to claim 14 or claim 15, characterised in that the aqueous colloidal dispersion of the cerium IV compound is obtained by dispersing in water, a cerium IV compound with general formula (I):

$$Ce(M)_x (OH)_y (NO_3)_z, n\ H_2O \qquad (I)$$

where
- M represents, an alkali metal or a quaternary ammonium radical,
- x is between 0 and 0.2,
- z is between 0 and 0.7,
- y is such that y = 4-z + x,
- n is between 0 and about 20.

**17.** A method according to claim 16, characterised in that the concentration of the cerium IV compound in said colloidal dispersion is between 0.1 and 2.0 moles/litre.

**18.** A method according to claim 16 or claim 17, characterised in that said dispersion is obtained by dispersing in water a cerium IV compound obtained by hydrolysis of an aqueous solution of a cerium IV salt in an acidic medium, by separating the precipitate obtained and by optional heat treatment.

**19.** A method according to any one of claims 14 to 18, characterised in that the normality of the basic solution is between 5 and 10 N.

**20.** A method according to any one of claims 14 to 19, characterised in that the quantity of base added is such that the final pH of the treated dispersion is greater than 7.

**21.** A method according to claim 20, characterised in that the quantity of base added is such that the final pH of the treated dispersion is greater than or equal to 9, and less than or equal to 10.

**22.** A method according to any one of claims 14 to 21, characterised in that the base is added to the aqueous colloidal dispersion of the cerium IV compound containing at least one oxide precursor or vice versa: addition being carried out all at once, gradually or continuously.

**23.** A method according to claim 22, characterised in that the rate of addition of the base to said dispersion is between 0.1 and 5 moles of $OH^-$ per mole of cerium IV per hour.

**24.** A method according to any one of claims 14 to 23, characterised in that the temperature at which the base is added is between room temperature and 60°C.

**25.** A method according to any one of claims 14 to 24, characterised in that the precipitate is separated using conventional solid-liquid separation techniques: filtration, decantation, centrifuging or draining, followed by one or more washes of the precipitate with water or an organic solvent.

**26.** A method according to any one of claims 14 to 25, characterised in that at the start of the heat treatment, the precipitate is dried in air or under reduced pressure of the order of 1 to 100 mm of mercury, at a temperature between room temperature and 100°C, for a period of between 2 and 48 hours.

**27.** A method according to any one of claims 14 to 26, characterised in that the calcining step is carried out at a temperature of between 400°C and 1000°C for a period of 1 hour to 24 hours.

**28.** A method according to claim 27, characterised in that the calcining temperature is between 600°C and 900°C.

10

EP 0 396 159 B1

**29.** A method according to claim 27 or claim 28, characterised in that the calcining period is between 4 and 10 hours.

**Patentansprüche**

**1.** Verfahren zur Herstellung einer Ceroxid-Zusammensetzung mit stabilisierter spezifischer Oberfläche, dadurch gekennzeichnet, daß man zu einem Ceroxid mit einer spezifischen Oberfläche von höher als 10 m$^2$/g einen Zusatzstoff gibt, der aus mindestens einem Oxid oder aus einem Vorläufer eines Oxids eines Metalles besteht, das aus der Gruppe der seltenen Erden gewählt wurde, und dadurch, daß man das genannte Ceroxid bei einer Temperatur zwischen 400 °C und 1000 °C kalziniert.

**2.** Verfahren nach Anspruch 1, dadurch gekennzeichnet, daß der Zusatzstoff 1 bis 20 Gew.-% des Ceroxids darstellt.

**3.** Verfahren nach Anspruch 1 bis 2, dadurch gekennzeichnet, daß der Zusatzstoff 1 bis 5 Gew.-% des Ceroxids darstellt.

**4.** Verfahren nach Anspruch 1, dadurch gekennzeichnet, daß man das Ceroxid mit mindestens einem der vorstehend genannten Metalloxide innig mischt.

**5.** Verfahren nach Anspruch 1, dadurch gekennzeichnet, daß man das Ceroxid mit Hilfe einer Lösung von mindestens einem Salz der vorstehend genannten Metalle, das durch Erhitzen zum Oxid zersetzbar ist, imprägniert.

**6.** Verfahren nach Anspruch 5, dadurch gekennzeichnet, daß das Gesamtvolumen der vorstehend genannten Lösung annähernd dem Gesamt-Porenvolumen des Ceroxids entspricht.

**7.** Verfahren nach einem der Ansprüche 5 oder 6, dadurch gekennzeichnet, daß der Oxidvorläufer ein Nitrat, Sulfat, Chlorid oder Carbonat der seltenen Erden ist.

**8.** Verfahren nach einem der Ansprüche 5 bis 7, dadurch gekennzeichnet, daß das Ceroxid imprägniert und bei einer Temperatur zwischen 80 °C und 300 °C getrocknet wird.

**9.** Verfahren nach Anspruch 8, dadurch gekennzeichnet, daß die Temperatur der Trocknung zwischen 100 °C und 150 °C gewählt wird.

**10.** Verfahren nach einem der Ansprüche 8 oder 9, dadurch gekennzeichnet, daß die Dauer der Trocknung zwischen 1 und 24 Stunden variiert.

**11.** Verfahren nach einem der vorstehenden Ansprüche, dadurch gekennzeichnet, daß die Temperatur der Kalzinierung zwischen 600 °C und 900 °C gewählt wird.

**12.** Verfahren nach einem der vorstehenden Ansprüche, dadurch gekennzeichnet, daß die Dauer der Kalzinierung zwischen 1 und 24 Stunden variiert.

**13.** Verfahren nach Anspruch 12, dadurch gekennzeichnet, daß die Dauer der Kalzinierung zwischen 4 und 10 Stunden gewählt wird.

**14.** Verfahren zur Herstellung einer Ceroxid-Zusammensetzung mit stabilisierter spezifischer Oberfläche, dadurch gekennzeichnet, daß es besteht in:
- einer ersten Stufe, bei der mindestens ein Oxidvorläufer eines metallischen Elementes A, gewählt aus der die seltenen Erden umfassenden Gruppe, in eine wäßrige kolloidale Dispersion einer Cer-(IV)-Verbindung mit einer spezifischen Oberfläche von höher als 10 m$^2$/g eingebracht wird,
- einer zweiten Stufe, bei der die genannte Dispersion durch Zugabe einer Base destabilisiert wird,
- einer dritten Stufe, bei der der erhaltene Niederschlag abgetrennt wird,
- einer vierten Stufe, bei der man ihn einer thermischen Behandlung unterzieht.

11

**15.** Verfahren nach Anspruch 14, dadurch gekennzeichnet, daß der Oxidvorläufer ein Nitrat, Sulfat, Chlorid oder Carbonat der seltenen Erden ist.

**16.** Verfahren nach Anspruch 14 oder 15, dadurch gekennzeichnet, daß die wäßrige kolloidale Dispersion einer Cer(IV)-Verbindung durch Dispergieren in Wasser einer Cer(IV)-Verbindung der allgemeinen Formel (I)

$$Ce\,(M)_x\,(OH)_y\,(NO_3)_z\,,\,n\,H_2O \qquad (I)$$

erhalten wird, in der
- M ein Alkalimetall oder einen quaternären Ammoniumrest darstellt,
- x zwischen 0 und 0,2 liegt,
- z zwischen 0 und 0,7 liegt,
- y einen solchen Wert besitzt, daß $y = 4 - z + x$ ist,
- n zwischen 0 und etwa 20 liegt.

**17.** Verfahren nach Anspruch 16, dadurch gekennzeichnet, daß die Konzentration der Cer(IV)-Verbindung in der genannten kolloidalen Dispersion zwischen 0,1 und 2,0 Mol/Liter variiert.

**18.** Verfahren nach einem der Ansprüche 16 oder 17, dadurch gekennzeichnet, daß die genannte Dispersion durch Dispergieren einer durch Hydrolyse einer wäßrigen Lösung von Cer(IV)-Salz im sauren Medium, Abtrennung des entstandenen Niederschlages und gegebenenfalls thermische Behandlung erhaltenen Cer(IV)-Verbindung in Wasser erhalten wird.

**19.** Verfahren nach einem der Ansprüche 14 bis 18, dadurch gekennzeichnet, daß die Normalität der basischen Lösung zwischen 5 und 10 N variiert.

**20.** Verfahren nach einem der Ansprüche 14 bis 19, dadurch gekennzeichnet, daß die Menge an zugesetzter Base so bemessen ist, daß der End-pH-Wert der behandelten Dispersion über 7 liegt.

**21.** Verfahren nach Anspruch 20, dadurch gekennzeichnet, daß die Menge an zugesetzter Base so bemessen ist, daß der End-pH-Wert der behandelten Dispersion höher oder gleich 9 und niedriger oder gleich 10 beträgt.

**22.** Verfahren nach einem der Ansprüche 14 bis 21, dadurch gekennzeichnet, daß man die Base zu der wäßrigen kolloidalen Dispersion der Cer(IV)-Verbindung gibt, die mindestens einen Oxidvorläufer enthält, oder umgekehrt, wobei die Zugabe mit einem Mal, nacheinander oder kontinuierlich erfolgen kann.

**23.** Verfahren nach Anspruch 22, dadurch gekennzeichnet, daß der Durchsatz der Zugabe der Base zu der genannten Dispersion zwischen 0,1 und 5 Mol $OH^-$ pro Mol Cer (IV) und pro Stunde variiert.

**24.** Verfahren nach einem der Ansprüche 14 bis 23, dadurch gekennzeichnet, daß die Temperatur, bei der man die Base zusetzt, zwischen der Umgebungstemperatur und 60 °C gewählt wird.

**25.** Verfahren nach einem der Ansprüche 14 bis 24, dadurch gekennzeichnet, daß man die Trennung des Niederschlages nach klassischen Techniken der Fest-Flüssig-Trennung wie Filtration, Dekantieren, Schleudern und Zentrifugieren durchführt und man anschließend eine oder mehrere Waschungen des Niederschlages mit Hilfe von Wasser oder einem organischen Lösungsmittel vornimmt.

**26.** Verfahren nach einem der Ansprüche 14 bis 25, dadurch gekennzeichnet, daß man zu Beginn der thermischen Behandlung eine Trocknung des Niederschlages an der Luft oder unter reduziertem Druck in der Größenordnung von 1 bis 100 mm Hg, bei einer Temperatur zwischen der Umgebungstemperatur und 100 °C und während einer Dauer zwischen 2 und 48 Stunden durchführt.

**27.** Verfahren nach einem der Ansprüche 14 bis 26, dadurch gekennzeichnet, daß man die Stufe der Kalzinierung bei einer Temperatur zwischen 400 °C und 1000 °C während einer Dauer zwischen 1 und 24 Stunden durchführt.

**28.** Verfahren nach Anspruch 27, dadurch gekennzeichnet, daß die Temperatur der Kalzinierung zwischen 600 °C und 900 °C liegt.

**29.** Verfahren nach einem der Ansprüche 27 und 28, dadurch gekennzeichnet, daß die Dauer der Kalzinierung zwischen 4 und 10 Stunden liegt.